Europäisches Patentamt

(19) European Patent Office

Office européen des brevets

(11) Publication number: **0 137 239**
**A1**

(12) # EUROPEAN PATENT APPLICATION

(21) Application number: **84109843.7**

(22) Date of filing: **17.08.84**

(51) Int. Cl.⁴: **B 22 D 11/16**
**B 22 D 11/06, G 05 D 9/12**

(30) Priority: **26.08.83 NO 833085**

(43) Date of publication of application:
**17.04.85 Bulletin 85/16**

(84) Designated Contracting States:
**AT BE CH DE FR GB IT LI NL SE**

(71) Applicant: **NORSK HYDRO A/S**
**Bygdoy Allé 2**
**N-Oslo 2(NO)**

(72) Inventor: **Rasmussen, Trygve Ostrem**
**N-4250 Kopervik(NO)**

(72) Inventor: **Vik, Per Kare Sorhaland**
**N-4280 Skudeneshavn(NO)**

(72) Inventor: **Carlsen, Arne Gotfred**
**Alavikvn. 28**
**N-4250 Kopervik(NO)**

(74) Representative: **WILHELMS & KILIAN Patentanwälte**
**Eduard-Schmid-Strasse 2**
**D-8000 München 90(DE)**

(54) Method and device for automatic level control.

(57) A method and a device for automatic level control of molten metal in continuous casting are disclosed. The adjustment comprises continuous adjustment of the metal flow in order to maintain a constant, optimum metal level, and furthermore a remote controlled automatic resetting of the metal level. The device comprises a float chamber (2) with float (1) controlling a plug rod (5) adjusting the metal flow by means of a diaphragm motor (8) with a relief valve (17). A servomotor (13) attached to the float (1) via a raisable/lowerable slide system (11) with integrated float arm (10) to which the relief valve (17) is attached takes care of the adjustment of the metal level.

Fig. 2

EP 0 137 239 A1

# WILHELMS & KILIAN
## PATENTANWÄLTE

0137239

EUROPEAN PATENT ATTORNEYS     EUROPÄISCHE PATENTVERTRETER     MANDATAIRES EN BREVETS EUROPEENS

NORSK HYDRO a.s.

Oslo / Norway

DR. ROLF E. WILHELMS
DR. HELMUT KILIAN

ELSASSERSTRASSE 2
8000 MÜNCHEN 80

TELEFON (089) 69 21 77
TELEX     52 94 07 (wuki d)
TELEGRAMME PATRANS MÜNCHEN
TELECOPIER gr. 2 + 3 (089) 222 066

---

Method and device for automatic level
control

---

Priority: Aug. 26, 1983 - Norway - No. 833085          P 1923-EP

The invention concerns a method and a device for automatic
adjustment and level control of molten metal in a metal
casting process, strip casting in particular.

Continuous casting of wide aluminium and aluminium alloy
strips requires advanced technology and equipment in order
to achieve uniform product quality. Finished cast strips with
a thickness of 5 to 10 mm are used as semi-manufactured products for further treatment/rolling into sheets/foils making
heavy demands on the surface quality and internal structures
such as uniform grain size, no occlusions etc. A uniform
supply of metal without fluctuations in the casting
mould/casting nozzle is among the most important factors
affecting the strip quality.

Adjustment and control of the metal volume and temperature
is often a complex process comprising several control stages.
U.S. Patent No. 3.405.757, for instance, describes a classic
adjustment system incorporating a float chamber placed
between a crucible/casting furnace and a fireproof, lined
gutter to the casting machine. A float following the movement
of the metal level in the chamber is designed to change the
position of a valve member that is moved in and out of the
tap hole in the furnace wall. A two-way limit switch connected to a motor (pressure or electrically driven) sees
to it that the valve body is adjusted and moved between
two predetermined level positions.

Unfortunately, such an on/off adjustment has proven unable
to provide the accuracy required, and it does not ensure
even, fluctuation-free feed of the metal to the casting
machine. Furthermore, due to time delay between signal for
actuation and change of valve position, the known adjustment
systems are not suitable for fine-tuned metal adjustment in
an integrated control system for a continuous strip casting
process.

The level control device for molten metal is applied in an
environment characterized by high temperatures, dust, and
it is also exposed to metal spray, corrosive atmosphere etc.
Consequently, there are strict requirements for a simple,
robust but reliable and accurate adjustment system, and it is
not possible to use the more sophisticated adjustment systems
developed for other processing industries.

Consequently, it is the object of this invention to provide
a method and a device for automatic level control of molten
metal which is continually self-adjusting towards the predetermined metal level and which furthermore automatically
ensures adjustment of a new metal level as part of a complex
control system for the casting process.

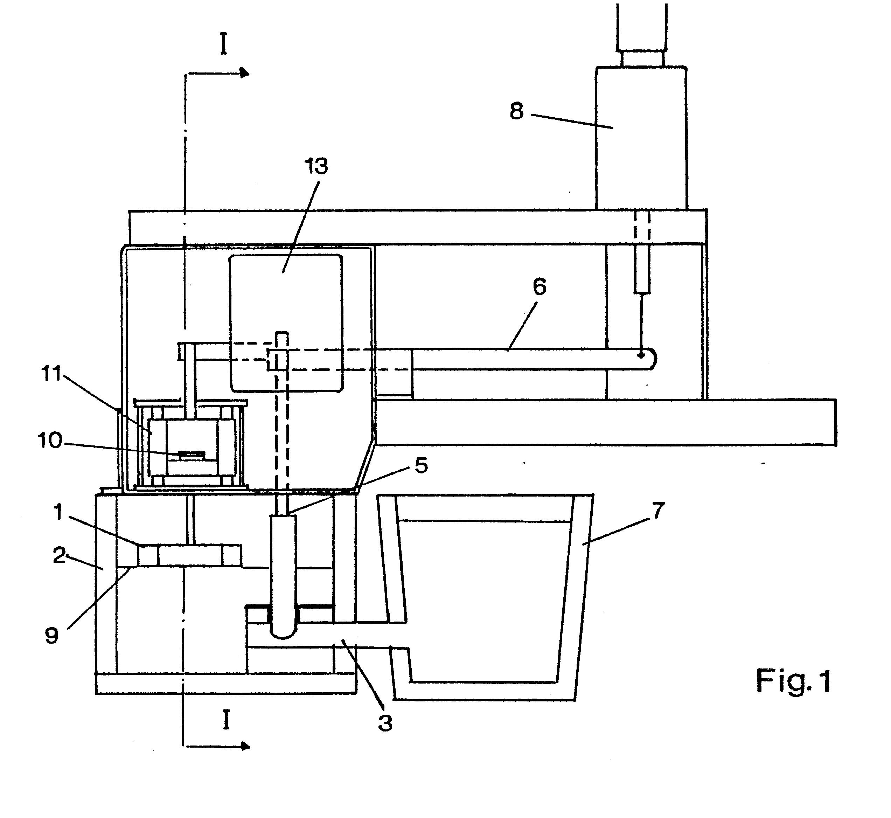

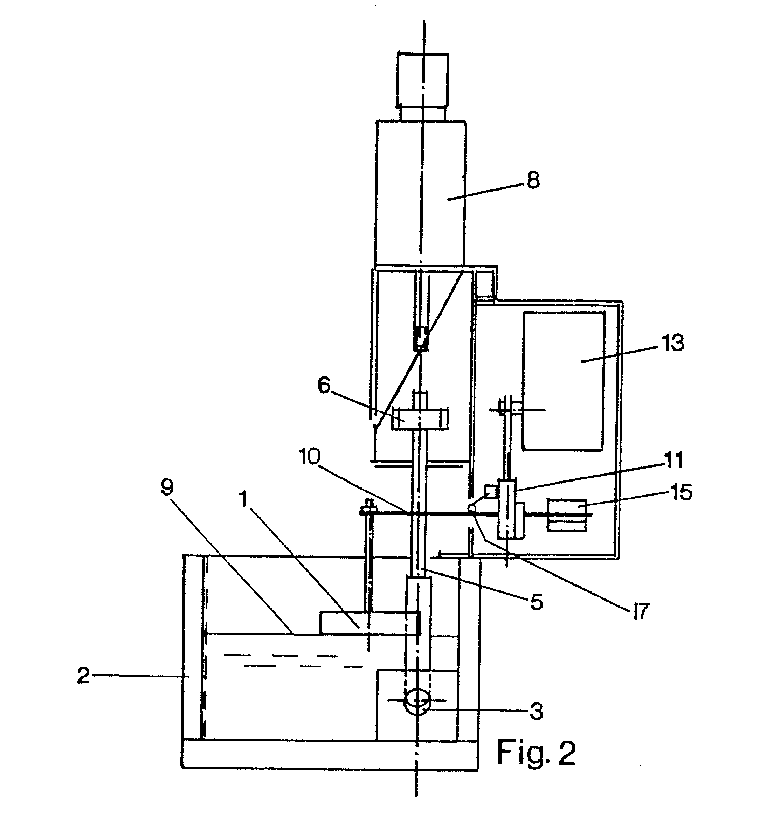

These and other objects and advantages of the invention are
achieved by means of a method and device, the new and unique
features of which will be stated in more detail in the
following specification and patent claims and illustrated by
means of the attached drawings, Figs. 1 and 2, of which

Fig. 1   shows schematically a level control device, and

Fig. 2   shows a cross-section of the device as taken along
         line I-I in Fig. 1.

The device for automatic adjustment and level control as shown in Fig. 1 comprises a float (1) placed in a float or level chamber (2) which is connected via tap hole (3) to the casting gutter (7) supplying the metal from the crucible (not shown in the figure). A plug rod (5) with a plug adjusting the degree of opening of the tap hole is connected to an air diaphragm motor (8) via an arm lever (6) and an attachment link. The air diaphragm motor (8) is connected to a relief valve (not shown in the figure) controlled by the float (1) which floats on the surface of the metal (9) in the float chamber by means of inclination of a float arm (10) fixed to a slide system (11). The slide system (11) is connected to a servomotor (13) enabling raising/lowering of the float, and thus the metal level, even by remote control.

Fig. 2 shows the device in cross-section as taken along line I-I in Fig. 1 with the float (1) in the float chamber (2), the tap hole (3) and the plug rod (5) for opening adjustment controlled by the air diaphragm motor (8). Furtheremore, there is shown an electric servomotor (13) for adjustment of the position of the float via the slide system (11) with an attached arm (10). A relief valve (17) connected to the float arm, and thus to the slide system (11), controls the air pressure on the diaphragm in the motor (8) by alternately increasing or reducing the pressure as a function of the inclination of the float arm. The float arm is also fitted with a diaphragm control valve (15) that closes up/opens up, respectively, for the air jet on two pneumatic sensors used as alarms in case of adjustment system failure, e.g. by power failure, mechanical break-down of the plug rod etc. The figure also shows the arm lever (6), which via the attachment link (not shown in the figure) connects the plug rod (5) to the air diaphragm motor (8).

The adjustment device according to the invention works as follows. The diaphragm motor is spring-loaded on one side of the diaphragm and air pressure loaded on the other side. Consequently, air pressure changes will move the diaphragm and thus the plug which closes the tap hole with reduced air pressure and vice versa.

At the start of the casting the air side of the diaphragm receives 100% of a pre-set air pressure. The plug opens fully, and the metal will flow into the float chamber (2) and gradually fill it. When the metal reaches the predetermined level (9), the metal will raise the float (1) and, via the float arm (10), it will actuate the relief valve (17) which gradually reduces the air pressure until the air pressure and the spring pressure on the diaphragm in the diaphragm motor reach a state of equilibrium. The plug rod (5) controlling the metal flow has now reached its correct position, the plug will be stable and the metal level will be constant under stable casting conditions. The float arm (10) will essentially be at a right angle to the vertical axis of the slide system. By changing the casting parameters, e.g. the casting speed, every slightest change in the metal level will bring about immediate correction of the tap hole opening such that the constant metal level in the float box will be maintained continuously. This is effected by adapting the position of the plug rod continuously by altering the pressure on the diaphragm in the diaphragm motor (8) which is in turn controlled by the relief valve in step with the movement of the float.

Furthermore, the device according to the invention offers the possibility of adjusting the metal level in the float chamber, e.g. if it is desirable to use the metal level actively in an integrated strip casting control process in order to control the metal volume/hydrostatic pressure on the nozzle.

The relief valve connected to the float arm (10), which is attached to the slide system (11) controlled by the servomotor (13), allows raising/lowering of the float and thus setting of a new metal level (9) in the float chamber and a new basic position of the relief valve at the same time.

The servomotor, which may also be operated manually, is equipped for remote control with position indication, and it may be connected to the control system for an automated casting process.

## Claims

1.  Method for automatic level adjustment of molten metal
    in continuous casting by means of a float (1) that
    follows the metal level in a float chamber (2) and
    affects the position of a plug rod (5) that adjusts
    the opening of the tap hole, where the level
    adjustment comprises adjustment of the set level in
    the float chamber where the position of the plug
    rod (5) is continuously adjusted in step with the
    metal level fluctuations by means of changes in the
    air pressure on the diaphragm motor (8) which
    actuates the plug rod,
    c h a r a c t e r i z e d   i n   t h a t
    an automatic resetting of the position of the float
    to a new level, which is initiated by remote control
    based on changes in the casting process control
    parameters is realized by means of a servomotor (13)
    that raises/lowers a float arm working jointly with
    the relief valve (17) to control the air pressure in
    the diaphragm motor (8) by means of a slide
    system (11).

2.  Device for automatic level control comprising a float
    chamber (2) with float (1) controlling a plug rod (5)
    adjusting the metal flow to the float chamber through
    a diaphragm motor (8) with a relief valve (17),
    c h a r a c t e r i z e d   i n   t h a t
    the device is equipped with a servomotor (13)
    attached to the float (1) via a raisable/lowerable
    slide system (11) with integrated float arm (10) to
    which the relief valve (17) is attached.

3.     Device according to claim 2,
       c h a r a c t e r i z e d   i n   t h a t
       the float arm (10) is equipped with a diaphragm device (15) for closing off/opening up for air jets
       from pneumatic sensors connected to an alarm system.

Fig.1

0137239

Fig. 2

## DOCUMENTS CONSIDERED TO BE RELEVANT

| Category | Citation of document with indication. where appropriate, of relevant passages | Relevant to claim | CLASSIFICATION OF THE APPLICATION (Int. Cl 4) |
|---|---|---|---|
| A | US-A-3 842 894 (SOUTHWORTH et al.) <br> * Abstract, figure * <br><br> --- | 1 | B 22 D 11/16 <br> B 22 D 11/06 <br> G 05 D 9/12 |
| A | DE-A-3 003 917 (COLATA CONTINUA) <br> * Claim 1 * <br><br> --- | 1 | |
| A | WO-A-8 002 659 (MASCHINENFABRIK & EISENGIESSEREI MEZGER) <br> * Abstract, figure * <br><br> --- | 1 | |
| D,A | US-A-3 405 757 (L.M. HARVEY et al.) <br><br> ----- | | |

TECHNICAL FIELDS SEARCHED (Int. Cl.4)

B 22 D 11/00
G 05 D 9/00

The present search report has been drawn up for all claims

| Place of search <br> BERLIN | Date of completion of the search <br> 19-11-1984 | Examiner <br> GOLDSCHMIDT G |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82